# EUROPEAN PATENT SPECIFICATION

(11) **EP 3 222 413 B1**
(45) Date of publication and mention of the grant of the patent: **08.09.2021**
(21) Application number: 16200672.0
(22) Date of filing: 25.11.2016
(51) Int. Cl.: B29C 73/16, B29L 30/00

(54) **CAP UNIT FOR PUNCTURE REPAIR**
KAPPENEINHEIT ZUR REPARATUR EINER REIFENPUNKTION
UNITÉ DE BOUCHON POUR RÉPARATION DE PERFORATION

(30) Priority: 25.03.2016 JP 2016062323
(43) Date of publication of application: 27.09.2017
(73) Proprietor: Sumitomo Rubber Industries, Ltd., Kobe-shi, Hyogo-ken 651-0072 (JP)
(72) Inventor: NAGATA, Yukinori, Kobe-shi,, Hyogo 651-0072 (JP)
(74) Representative: Manitz Finsterwald Patent- und Rechtsanwaltspartnerschaft mbB

(56) References cited:
- US-A1- 2008 230 142
- US-A1- 2011 290 372
- US-A1- 2012 298 255
- US-A1- 2013 068 346

## Description

### [Technical field]

The present invention relates to a cap unit for puncture repair used for injecting a puncture repair liquid and compressed air sequentially into a punctured tire to temporary fix the puncture.

### [Background art]

For example, in JP 2011-189696 A, a cap unit for puncture repair has been proposed. In this cap unit, as shown in Figure 4, a first flow path (a) for taking compressed air from a compressor into a bottle container, is provided with a check valve (b) to prevent a puncture repair liquid from flowing backward. The check valve (b) in this proposal comprises a metal ball valve b1 disposed in a valve housing zone (c) in the first flow path (a), a rubber valve seat b2 disposed at the lower end of the valve housing zone (c), and a biasing spring b3 for pressing the ball valve b1 against the valve seat b2. Such structure leads to an increase in the cost.

On the other hand, in JP 2010-023244 A, a check valve having a simple structure is disclosed, wherein a metal ball valve is inserted in a first flow path provided with a valve seat portion. In this check valve, the valve seat portion is closed by the weight of the ball valve. In order to retain the ball valve, a locking pin is inserted in the upper end of the first flow path. This structure is simple, and the parts are less in number, therefore, the cost can be reduced. However, since the ball valve is free to move in the first flow path during storage by the vibrations of the vehicle during traveling, there is a problem such that abnormal noise is caused, making the passenger uncomfortable.

Furthermore, US 2008/0230142 A1 describes a cap unit for puncture repair in accordance with the preamble of claim 1.

### [Summary of the Invention]

### [Problems to be resolved by the invention]

It is, therefore, an object of the present invention to provide a cap unit for puncture repair, in which abnormal noise occurring from a ball valve due to vibrations of the vehicle during traveling can be suppressed, while employing a simple structure to achieve a cost reduction.

### [Means for Solving the Problems]

The present invention is characterized by comprising
a cap main body which is attached to a mouth portion of a bottle container containing a puncture repair liquid, and which has a first flow path for taking compressed air from a compressor into the bottle container, and a second flow path for taking out the puncture repair liquid and the compressed air sequentially from the bottle container by the taking-in of the compressed air, and
a check valve which is disposed in the first flow path to prevent a back-flow of the puncture repair liquid from the bottle container,
in a reference attitude of the bottle container whose mouth portion is directed downward, the first flow path has a vertical passage part extending downward from the top opening which opens within the bottle container, and
   a valve seat portion formed in the vertical passage part,
the check valve is a ball valve disposed in a valve housing zone which is within the vertical passage part and on the upper side of the valve seat portion, and
the ball valve is made of a rubber elastic body having a specific gravity of 1.1 or more, and a rebound resilience of 15% or less.

In the cap unit for puncture repair according to the present invention, the rubber elastic body preferably has a low-temperature-embrittlement temperature of -30 degrees C or below.

In the cap unit for puncture repair according to the present invention, the ratio Db/Da of the outer diameter Db of the ball valve and an inner diameter Da of the valve housing zone is preferably in the range from 0.75 to 0.9.

In the cap unit for puncture repair according to the present invention, the ratio Db/L of the outer diameter Db of the ball valve and a length L of the valve housing zone is preferably 0.5 or more.

The "specific gravity" is measured in accordance with JIS K6268 "Rubber, vulcanized-Determination of density".

The "rebound resilience" is measured in accordance with JIS K6255 "Rubber, vulcanized or thermoplastic-Determination of rebound resilience" at a temperature of 23 degrees C.

The "low-temperature-embrittlement temperature" is measured in accordance with JIS K6261 "Rubber, vulcanized or thermoplastic Determination of low temperature properties", "Low-temperature brittleness test".

### [Effects of the Invention]

In the present invention, the check valve disposed in the first flow path is the ball valve disposed in the valve housing zone of the vertical passage part, and the ball valve is formed from the rubber elastic body having a specific gravity of 1.1 or more and a rebound resilience of 15% or less.

Since the specific gravity of the ball valve is 1.1 or more, it can move down in the puncture repair liquid immediately by its own weight and can rapidly close the valve seat portion, which means that it can function as a check valve without using a biasing spring. Further, the ball valve is formed from the rubber elastic body of low repulsion. Therefore, even if the ball valve repeats collisions with the wall of the first flow path due to the vibrations during traveling of the vehicle, abnormal noise is hard to occur and quietness can be ensured.

### [Brief description of the Drawings]

[Figure 1] a perspective view showing an example of a puncture repair kit employing a cap unit according to the present invention.
[Figure 2] a cross-sectional view of the cap unit.
[Figure 3] (A) is a vertical cross-sectional view showing the check valve in closeup, (B) is a lateral cross-sectional view showing an engaging portion.

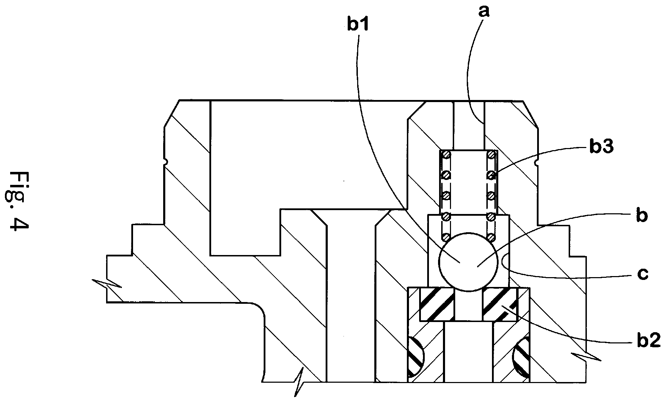

[Figure 4] a cross-sectional view showing the structure of the check valve of the known cap unit.

### [Mode for carrying out the invention]

Hereinafter, an embodiment of the present invention will be described in detail.

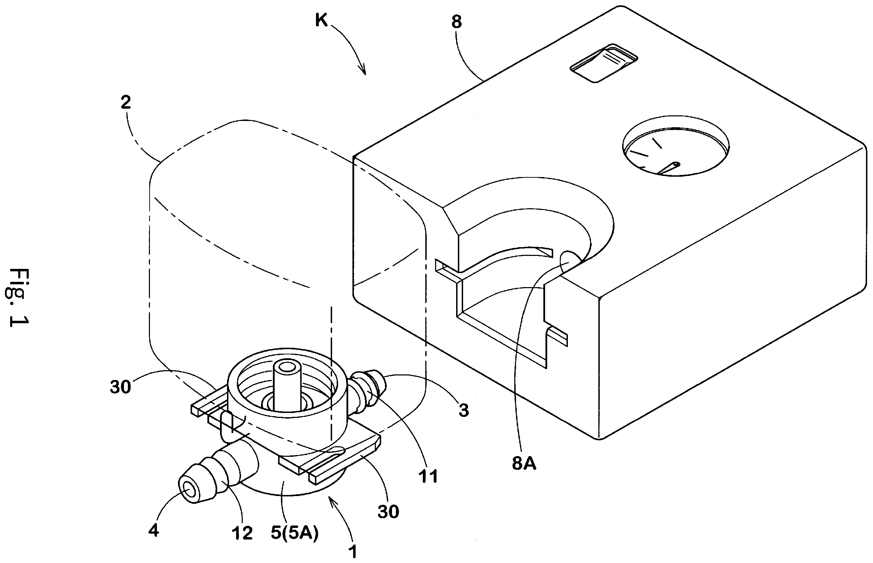

Figure 1 shows an example of a puncture repair kit K employing a cap unit 1 according to the present invention.
The puncture repair kit K has the cap unit 1, a bottle container 2, and a compressor 8 so as to inject a puncture repair liquid and compressed air sequentially into a punctured tire to temporary fix the puncture.

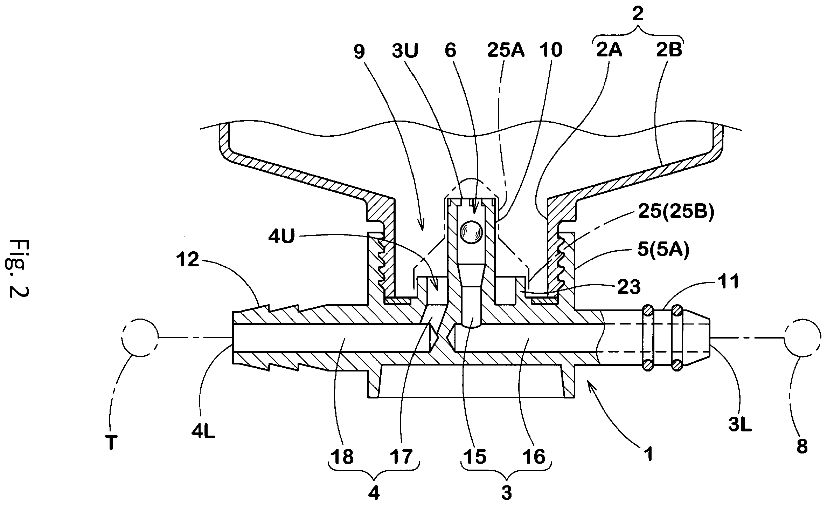

Figure 2 is a sectional view of the cap unit 1 showing a state in which the bottle container 2 is mounted.
The bottle container 2 has a well-known structure in which a small-diameter cylindrical mouth portion 2A for taking out the puncture repair liquid is protruded from the lower end of the container portion 2B accommodating the puncture repair liquid. Hereinafter, the cap unit 1 will be described in its reference attitude such that the mouth portion 2A of the bottle container 2 is directed downward.

As shown in Figure 2, the cap unit 1 in this embodiment has a cap main body 5 having a first flow path 3 and a second flow path 4, and a check valve 6 disposed in the first flow path 3.
The first flow path 3 is for taking the compressed air from the compressor 8 in the bottle container 2.
The second flow path 4 is for taking out the puncture repair liquid and the compressed air sequentially from the bottle container 2 by the taking-in of the compressed air.

More specifically, the cap main body 5 in this example is provided at the upper end of a cylindrical body portion 5A with a bottle mounting recess 9 for mounting the mouth portion 2A.
The inner circumferential surface of the bottle mounting recess 9 is provided with an internal threaded portion to which the mouth portion 2A is attached by being screwed.
In the bottom surface of the bottle mounting recess 9, there are disposed a boss portion 10 extending into the bottle container 2, and an annular rib 23 surrounding the boss portion 10 so that they protrude therefrom.
The boss portion 10 and the annular rib 23 in this example are formed concentrically with the bottle mounting recess 9.

In the side surface of the cap main body 5, there are disposed a first connecting portion 11 for the compressor, and a second connecting portion 12 for the tire so that they protrude therefrom.
The first connecting portion 11 in this example is formed as a connection nozzle which can be coupled directly with a compressed air discharge port 8A (shown in Figure 1) of the compressor 8 without using a hose.
The second connecting portion 12 in this example is formed as a hose connecting portion to which a hose extending from the tire T can be connected.

of the first and second flow paths 3 and 4 formed in the cap main body 5, the first flow path 3 has a vertical passage part 15 and a horizontal passage part 16.
The vertical passage part 15 extends downwardly from the upper opening 3U which opens at the upper end of the boss portion 10. The horizontal passage part 16 extends substantially horizontally from a lower opening 3L which opens at the tip end of the first connecting portion 11, and intersects the vertical passage part 15 in the form of an L-shape.

The second flow path 4 has a vertical passage part 17 and a horizontal passage part 18.
The vertical passage part 17 extends downwardly from the upper opening 4U which opens in the bottom surface of the bottle mounting recess 9 and between the boss portion 10 and the annular rib 23.
The horizontal passage part 18 extends substantially horizontally from a lower opening 4L which opens at the tip end of the second connecting portion 12, and intersects the vertical passage part 17 in the form of an L-shape.

In the first flow path 3, there is disposed the check valve 6 to prevent the backflow of the puncture repair liquid from the bottle container 2.

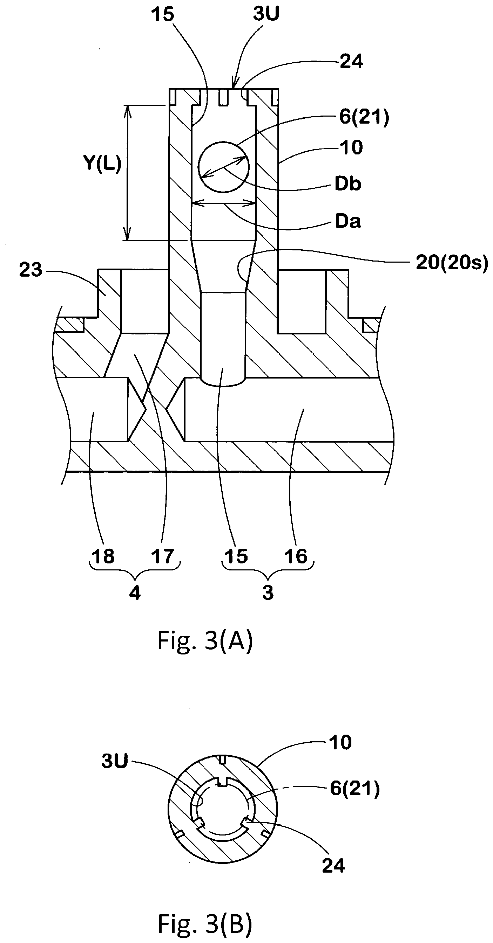

In the vertical passage part 15 of the first flow path 3, as shown in Figure 3(A), there are disposed a valve seat portion 20, and a valve housing zone Y located on the upper side of the valve seat portion.
The valve seat portion 20 has a cone-shaped valve seat surface 20s whose diameter is reduced toward the lower side.
The check valve 6 is formed by a ball valve 21 disposed in the valve housing zone Y.
The ball valve 21 is placed in the valve housing zone Y loosely to be movable up and down, and can close the valve seat portion 20 by the down motion due to its own weight.
Thereby, the reverse flow of the puncture repair liquid toward the compressor is prevented.

In this example, the upper opening 3U is provided with a locking portion 24 for preventing the ball valve 21 from falling out. Accordingly, the valve housing zone Y is formed as a zone between the valve seat portion 20 and the locking portion 24. The locking portion 24 is, as shown in Figure 3(B), formed by a plurality of (eg, three) projections projecting from the inner circumferential surface of the boss portion 10.
In this example, it is formed by melting the boss portion 10 partially by the use of, for example, a soldering iron or the like after the ball valve 21 has been inserted in the valve housing zone Y.

The ball valve 21 is formed from a rubber elastic body having a specific gravity of 1.1 or more and a rebound resilience of 15% or less.

The specific gravity of the puncture repair liquid is usually about 1.03, and the ball valve 21 is heavier than the puncture repair liquid. Therefore, when the puncture repair liquid is going to flow back, the ball valve 21 moves down immediately, and it is possible to close the valve seat 20.
If the specific gravity is less than 1.1, the downward movement due to its own weight becomes slower, and the backflow of the puncture repair liquid can not be sufficiently prevented. Therefore, it is preferable that the specific gravity is 1.3 or more. The upper limit of the specific gravity is not particularly restricted.

Moreover, the ball valve 21 is formed from the rubber elastic body of low repulsion.
Therefore, during storage, even if the ball valve 21 repeats collisions with the wall of the first flow path 3 due to vibrations during traveling of the vehicle, abnormal noise is hard to occur and quietness can be ensured.
If the rebound resilience is more than 15%, the occurrence of abnormal noise can not be sufficiently prevented.
Although the lower limit of the rebound resilience is not particularly restricted, it is difficult at present to produce a rubber whose rebound resilience is less than 2%.
On the other hand, since the ball valve 21 is formed from the rubber elastic body, even if the valve seat portion 20 is formed from a plastic as a part of the cap main body 5, the sealing can be assured.

As a material of the rubber elastic body of low repulsion, butadiene rubber (BR), styrene-butadiene (SBR), butyl rubber (IIR), ethylene-propylene rubber (EPM, EP), ethylene-propylene-diene rubber (EPDM), chloroprene rubber (CR), acrylic rubber (ACM, ANM), chlorosulfonated polyethylene rubber (CSM), silicone rubber (Si, Q, VMQ, SR), fluoro rubber (FKM, FRM), epichlorohydrin rubber (CO, ECO) and the like can be used.

There is a tendency that the puncture repair kits K are stored or used in a temperature range from -30 degrees C to +60 degrees c. Therefore, it is preferable for the cap unit 1 that the ball valve 21 does not cause brittle fracture at least down to -30 degrees C.
Accordingly, as the ball valve 21, the rubber elastic body having the low-temperature-embrittlement temperature of under - 30 degrees C is preferably used.

In the check valve 6, it is preferable that the ratio Db/Da of the outer diameter Db of the ball valve 21 and the inner diameter Da of the valve housing zone Y is in a range of from 0.75 to 0.9.
If the ratio Db/Da is less than 0.75, then the movement of the ball valve 21 in the valve housing zone Y becomes large, and the collision with the wall becomes strong. Thus, this is disadvantageous for suppressing the generation of abnormal noise. If the ratio Db/Da is more than 0.9, the flow rate of the high pressure air passing by the ball valve 2 is reduced, and the time required for injecting the puncture repair liquid and increasing the pressure becomes longer, which is disadvantageous to the puncture repair work.

In the check valve 6, it is also preferable that the ratio Db/L between the outer diameter Db of the ball valve 21 and the length L of the valve receiving area Y is 0.5 or more. If the ratio Db/L is less than 0.5, the movement of the ball valve 21 within the valve housing zone Y becomes large, which is disadvantageous for suppressing the generation of abnormal noise.

In Figure 1, the reference numeral 30 denotes a guide and stopper effective at the time of attaching the cap unit 1 to the compressor 8.
In Figure 2, the reference numeral 25 denotes an inner lid for preventing the puncture repair liquid from flowing out of the upper openings 3U and 4U before actuating the puncture repair kit K.
This inner lid 25 has a first sealing portion 25A and a second sealing portion 25B.
The first seal portion 25A hermetically contacts with the outer circumferential surface of the boss portion 10 to thereby seal the upper opening 3U.
The second sealing portion 25B hermetically contacts with the outer circumferential surface of the annular rib 23 to thereby seal the upper opening 4U.
During the puncture repair kit K is operating, the compressed air from the compressor 8 pushes up the inner lid 25, and the inner lid 25 is automatically removed.

while detailed description has been made of a particularly preferred embodiment of the present invention, the present invention can be embodied in various forms without being limited to the illustrated embodiment.

### [Working Examples]

In order to confirm the effects of the present invention, cap units having the structure shown in Figure 2, were experimentally manufactured according to the specifications shown in Table 1, and each of the cap units was tested for the injecting and inflating time, and about whether the puncture repair liquid was flowed backward or not, and whether abnormal noise was generated from the ball valve or not.
The specific gravity, rebound resilience, and low-temperature-embrittlement temperature of the ball valve were changed by changing the material of the rubber elastic body.
(1) Injecting and inflating time: Using a common compressor, the time required to inject 400cc of a puncture repair liquid into the tire (195/65R15) and to inflate the tire from zero pressure to 250 kPa was measured. The ambient temperature was - 30 degrees C.
(2) Whether the puncture repair liquid was flowed backward or not: After the injecting work of the puncture repair liquid was done, the cap unit was removed, and the presence or absence of the reverse flow into the first flow path was visually checked.
(3) Whether abnormal noise was generated or not: During traveling in the city streets, each cap unit put on the floor of the rear seat was checked by the driver whether abnormal noise due to the ball valve was generated or not. In the results,
   A denotes that abnormal noise was not generated,
   B denotes that abnormal noise was slightly generated, and
   C denotes that abnormal noise was generated.

**[Table 1]**

| | | Comparative Example 1 | Comparative Example 2 | Working Example 1 | Working Example 2 | Comparative Example 3 | Working Example 3 | Working Example 4 | Working Example 5 | Working Example 6 | Working Example 7 |
|---|---|---|---|---|---|---|---|---|---|---|---|
| < Ball valve > | | | | | | | | | | | |
| | specific gravity | 7.8 | 1.0 | 1.1 | 1.1 | 1.1 | 1.1 | 1.1 | 1.1 | 1.1 | 1.1 |
| | rebound resilience (%) | - | 4 | 4 | 4 | 20 | 4 | 15 | 10 | 13 | 6 |
| | material | SUS | IIR | IIR | IIR | BR | IIR | BR | SBR | VMQ | FKM |
| | low-temperature-embrittlement | - | -40 | -40 | -40 | -40 | -40 | -60 | -30 | -80 | -30 |
| | temperature (deg.C) | | | | | | | | | | |
| | outer diameter Db (mm) | 3.5 | 3.5 | 2.8 | 3.5 | 3.5 | 3.8 | 3.5 | 3.5 | 3.5 | 3.5 |
| inner diameter Da of | | 4.0 | 4.0 | 4.0 | 4.0 | 4.0 | 4.0 | 4.0 | 4.0 | 4.0 | 4.0 |
| | valve housing zone (mm) | | | | | | | | | | |
| length L of | | 6.0 | 6.0 | 6.0 | 6.0 | 6.0 | 6.0 | 6.0 | 6.0 | 6.0 | 6.0 |
| | valve housing zone (mm) | | | | | | | | | | |
| ratio Db/Da | | 0.88 | 0.88 | 0.70 | 0.88 | 0.88 | 0.95 | 0.88 | 0.88 | 0.88 | 0.88 |
| ratio Db/L | | 0.58 | 0.58 | 0.47 | 0.58 | 0.58 | 0.63 | 0.58 | 0.58 | 0.58 | 0.58 |
| injecting and inflating time | | 780 | 765 | 760 | 775 | 770 | 910 | 760 | 765 | 770 | 760 |
| presence or absence of | | absence | presence | absence | absence | absence | absence | absence | absence | absence | absence |
| | backward flow | | | | | | | | | | |
| abnormal noise generation | | C | A | B | A | C | A | A | A | A | A |

As shown in Table, it was confirmed that, in the working examples, abnormal noise generated from the ball valve due to vibrations of the vehicle during traveling can be suppressed.

### [Description of the signs]

- 1: cap unit
- 2: bottle container
- 2A: mouth portion
- 3: first flow path
- 3U: opening
- 4: second flow path
- 5: cap main body
- 6: check valve
- 8: compressor
- 15: vertical passage part
- 20: valve seat portion
- 21: ball valve
- Y: valve housing zone

## Claims

1. A cap unit (1) for puncture repair comprising:
a cap main body (5) which is capable of being attached to a mouth portion (2A) of a bottle container (2) containing a puncture repair liquid, and which has
a first flow path (3) for taking compressed air from a compressor (8) into the bottle container (2), and
a second flow path (4) for taking out the puncture repair liquid and the compressed air sequentially from the bottle container (2) by the taking-in of the compressed air, and
a check valve (6) which is disposed in the first flow path (3) to prevent a back-flow of the puncture repair liquid from the bottle container (2),
in a reference attitude of the bottle container (2) whose mouth portion (2A) is directed downward, the first flow path (3) has a vertical passage part (15) extending downward from a top opening (3U) which opens within the bottle container (2), and a valve seat portion (20) formed in the vertical passage part (15),
wherein the check valve (6) is a ball valve (21) disposed in a valve housing zone (Y) which is within the vertical passage part (15) and on the upper side of the valve seat portion (20), and
the ball valve (21) is made of a rubber elastic body,
**characterized in that**
the rubber elastic body has a specific gravity of 1.1 or more, and a rebound resilience of 15% or less.

2. The cap unit for puncture repair as set forth in claim 1, which is **characterized in that** the rubber elastic body has a low-temperature-embrittlement temperature of -30 degrees C or below.

3. The cap unit for puncture repair as set forth in claim 1 or 2, which is **characterized in that** the ratio (Db/Da) of the outer diameter (Db) of the ball valve (21) and an inner diameter (Da) of the valve housing zone (Y) is in a range from 0.75 to 0.9.

4. The cap unit for puncture repair as set forth in claim 1, 2 or 3, which is **characterized in that** the ratio (Db/L) of the outer diameter (Db) of the ball valve (21) and a length (L) of the valve housing zone (Y) is 0.5 or more.

## Patentansprüche

1. Kappeneinheit (1) zur Pannenreparatur, umfassend:
einen Kappenhauptkörper (5), der an einem Mündungsabschnitt (2A) eines Flaschenbehälters (2), der eine Pannenreparaturflüssigkeit enthält, angebracht werden kann, und der aufweist
einen ersten Strömungsweg (3) zur Aufnahme von Druckluft aus einem Kompressor (8) in den Flaschenbehälter (2), und
einen zweiten Strömungsweg (4) zum Entnehmen der Pannenreparaturflüssigkeit und der Druckluft nacheinander aus dem Flaschenbehälter (2) durch das Aufnehmen der Druckluft, und
ein Rückschlagventil (6), das in dem ersten Strömungsweg (3) angeordnet ist, um ein Zurückfließen der Pannenreparaturflüssigkeit aus dem Flaschenbehälter (2) zu verhindern,
wobei in einer Bezugslage des Flaschenbehälters (2), dessen Mündungsabschnitt (2A) nach unten gerichtet ist, der erste Strömungsweg (3) einen vertikalen Durchgangsteil (15), der sich von einer oberen Öffnung (3U), die sich innerhalb des Flaschenbehälters (2) öffnet, nach unten erstreckt, und einen Ventilsitzabschnitt (20), der in dem vertikalen Durchgangsteil (15) ausgebildet ist, aufweist,
wobei das Rückschlagventil (6) ein Kugelventil (21) ist, das in einer Ventilgehäusezone (Y) angeordnet ist, die sich innerhalb des vertikalen Durchgangsteils (15) und an der Oberseite des Ventilsitzabschnitts (20) befindet, und
das Kugelventil (21) aus einem elastischen Gummikörper gefertigt ist,
**dadurch gekennzeichnet, dass**
der elastische Gummikörper ein spezifisches Gewicht von 1,1 oder mehr und eine Rückprallelastizität von 15% oder weniger aufweist.

2. Kappeneinheit zur Pannenreparatur nach Anspruch 1, die **dadurch gekennzeichnet ist, dass** der elastische Gummikörper eine Tieftemperatur-Versprödungstemperatur von -30 Grad C oder darunter aufweist.

3. Kappeneinheit zur Pannenreparatur nach Anspruch 1 oder 2, die **dadurch gekennzeichnet ist, dass** das Verhältnis (Db/Da) des Außendurchmessers (Db) des Kugelventils (21) und eines Innendurchmessers (Da) der Ventilgehäusezone (Y) in einem Bereich von 0,75 bis 0,9 liegt.

4. Kappeneinheit zur Pannenreparatur nach Anspruch 1, 2 oder 3, die **dadurch gekennzeichnet ist, dass** das Verhältnis (Db/L) des Außendurchmessers (Db) des Kugelventils (21) und einer Länge (L) der Ventilgehäusezone (Y) 0,5 oder mehr beträgt.

## Revendications

1. Unité de bouchon (1) pour réparation de perforation, comprenant :
un corps principal formant bouchon (5) qui est capable d'être attaché à une portion d'embouchure (2A) d'un conteneur de bouteille (2) contenant un liquide de réparation de perforation, et qui a
un premier trajet d'écoulement (3) destiné à admettre de l'air comprimé provenant d'un compresseur (8) jusque dans le conteneur de bouteille (2), et
un second trajet d'écoulement (4) destiné à évacuer le liquide de réparation de perforation et l'air comprimé séquentiellement hors du conteneur de bouteille (2) par admission de l'air comprimé, et
un clapet anti-retour (6) qui est disposé dans le premier trajet d'écoulement (3) pour empêcher un reflux du liquide de réparation de perforation depuis le conteneur de bouteille (2),
dans une attitude de référence du conteneur de bouteille (2) dont la portion d'embouchure (2A) est dirigée vers le bas, le premier trajet d'écoulement (3) a une partie de passage verticale (15) s'étendant vers le bas depuis une ouverture supérieure (3U) qui s'ouvre à l'intérieur du conteneur de bouteille (2), et une portion de siège de vanne (20) formée dans la partie de passage verticale (15),
dans lequel le clapet anti-retour (6) est une vanne à boisseau sphérique (21) disposée dans une zone de logement de vanne (Y) qui est à l'intérieur de la partie de passage verticale (15) et sur le côté supérieur de la portion de siège de vanne (20), et
la vanne à boisseau sphérique (21) est faite d'un corps élastique en caoutchouc,
**caractérisée en ce que**
le corps élastique en caoutchouc a une gravité spécifique de 1,1 ou plus, et une élasticité de rebondissement de 15 % ou moins.

2. Unité de bouchon pour réparation de perforation selon la revendication 1, qui est **caractérisée en ce que** le corps élastique en caoutchouc a une température de fragilisation à basse température de -30 degrés Celsius ou en dessous.

3. Unité de bouchon pour réparation de perforation selon la revendication 1 ou 2, qui est **caractérisée en ce que** le rapport (Db/Da) du diamètre extérieur (Db) de la vanne à boisseau sphérique (21) et d'un diamètre intérieur (Da) de la zone de logement de valve (Y) est dans une plage allant de 0,75 à 0,9.

4. Unité de bouchon pour réparation de perforation selon la revendication 1, 2, ou 3, qui est **caractérisée en ce que** le rapport (Db/L) du diamètre extérieur (Db) de la vanne à boisseau sphérique (21) et d'une longueur (L) de la zone de logement de vanne (Y) est de 0,5 ou plus.
